# FASCICULE DE BREVET EUROPEEN

(11) **EP 4 369 618 B1**
(45) Date de publication et mention de la délivrance du brevet: **05.08.2026**
(21) Numéro de dépôt: 23208216.4
(22) Date de dépôt: 07.11.2023
(51) Int. Cl.: H04B 7/04, H01Q 15/14, H04B 7/06, H04B 7/155

(54) **DISPOSITIF RELAIS POUR ONDES RADIO**
FUNKWELLENRELAISVORRICHTUNG
RADIO WAVE RELAY DEVICE

(30) Priorité: 08.11.2022 FR 2211589
(43) Date de publication de la demande: 15.05.2024
(73) Titulaire: Commissariat à l'Energie Atomique et aux Energies Alternatives, 75015 Paris (FR)
(72) Inventeur: CLEMENTE, Antonio, 38054 GRENOBLE CEDEX 09 (FR); D'ERRICO, Raffaele, 38054 GRENOBLE CEDEX 09 (FR)
(74) Mandataire: Cabinet Beaumont

(56) Documents cités:
- WO-A1-2021/150384
- US-A1- 2021 175 623
- US-A1- 2022 158 363

## Description

### Domaine technique

La présente description concerne de façon générale les dispositifs électroniques et, plus particulièrement, les dispositifs relais pour ondes radio.

### Technique antérieure

Dans le domaine des communications par ondes radio, des dispositifs relais capables de recevoir une onde radio incidente en provenance d'une antenne distante et de réémettre l'onde vers un milieu extérieur ont été proposés. De tels dispositifs permettent notamment d'étendre une couverture réseau par rapport à un cas où seule l'antenne distante serait utilisée.

Les dispositifs relais existants présentent toutefois divers inconvénients.

Le document WO 2021/150384 décrit une antenne réseau de réflexion avec balayage de faisceau en deux dimensions.

Le document US 2021/175623 décrit un émetteur sans fil réalisant un multiplexage en fréquence de canaux.

Le document US 2022/158363 décrit des dispositifs de redirection active pour les applications sans fil. Résumé de l'invention

Il existe un besoin d'améliorer les dispositifs relais pour ondes radio existants.

L'invention est définie par les revendications 1 et 6. Les revendications dépendantes couvrent des modes de réalisation et variantes de l'invention.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue de côté, schématique et partielle, d'un exemple d'antenne à réseau transmetteur du type auquel s'appliquent, à titre d'exemple, des modes de réalisation décrits ;
la figure 2 est une vue de côté, schématique et partielle, d'un exemple d'antenne à réseau réflecteur du type auquel s'appliquent, à titre d'exemple, des modes de réalisation décrits ;
la figure 3 est une vue de côté, schématique et partielle, d'un exemple de dispositif relais pour ondes radio selon un mode de réalisation ; et
la figure 4 est une vue de côté, schématique et partielle, d'un exemple de dispositif relais pour ondes radio selon un mode de réalisation.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, des modes de réalisation de dispositifs relais comprenant au moins une antenne à réseau transmetteur et/ou au moins une antenne à réseau réflecteur sont décrits ci-après. La structure et le fonctionnement de la ou des sources primaires de l'antenne, destinées à irradier le réseau transmetteur ou le réseau réflecteur, ne seront toutefois pas détaillées, les modes de réalisation décrits étant compatibles avec toutes ou la plupart des sources primaires d'irradiation pour antenne à réseau transmetteur ou à réseau réflecteur connues. À titre d'exemple, chaque source primaire est adaptée à produire un faisceau de forme générale conique irradiant tout ou partie du réseau transmetteur ou du réseau réflecteur. Chaque source primaire comprend par exemple une antenne cornet. À titre d'exemple, l'axe central de chaque source primaire est sensiblement orthogonal au plan moyen du réseau.

Par ailleurs, les procédés de fabrication des réseaux transmetteurs, des réseaux réflecteurs et des dispositifs relais ne seront pas détaillés, la réalisation des réseaux transmetteurs, des réseaux réflecteurs et des dispositifs relais décrits étant à la portée de la personne du métier à partir des indications de la présente description.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais « coupled ») entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieur », « inférieur », etc., ou à des qualificatifs d'orientation, tels que les termes « horizontal », « vertical », etc., il est fait référence, sauf précision contraire, à l'orientation des figures.

Sauf précision contraire, les expressions « environ », « approximativement », « sensiblement », et « de l'ordre de » signifient à 10 % près, de préférence à 5 % près.

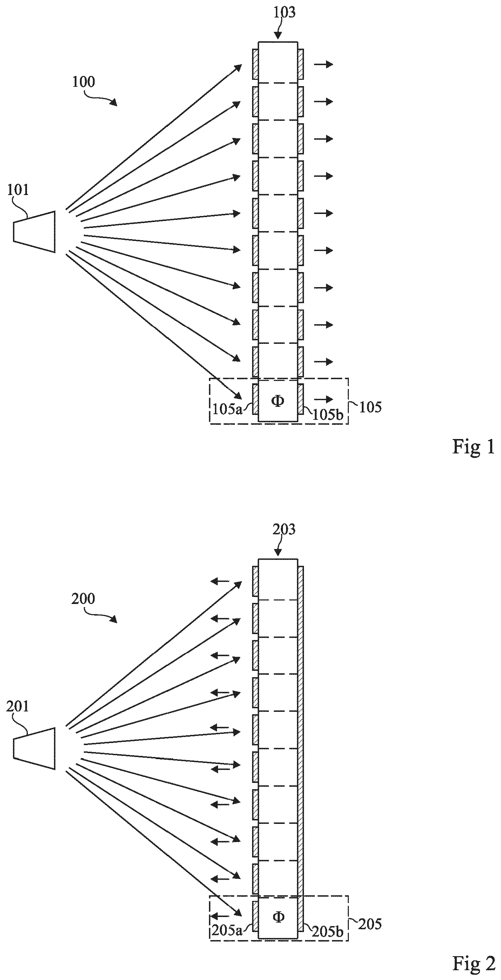

La figure 1 est une vue de côté, schématique et partielle, d'un exemple d'antenne 100 à réseau transmetteur (« transmitarray antenna », en anglais) du type auquel s'appliquent, à titre d'exemple, des modes de réalisation décrits.

L'antenne 100 comprend typiquement une ou plusieurs sources primaires 101 (une unique source 101, dans l'exemple représenté) irradiant un réseau transmetteur 103. La source 101 peut présenter une polarisation quelconque, par exemple linéaire ou circulaire. Le réseau 103 comprend une pluralité d'éléments ou cellules élémentaires 105, par exemple disposées en matrice selon des lignes et des colonnes. Chaque cellule 105 comprend typiquement un premier élément d'antenne 105a, situé du côté d'une première face du réseau 103 disposée en regard de la source primaire 101, et un deuxième élément d'antenne 105b, situé du côté d'une deuxième face du réseau opposée à la première face. La deuxième face du réseau 103 est par exemple tournée vers un milieu d'émission, ou milieu extérieur, de l'antenne 100.

Chaque cellule 105 est apte, en émission, à recevoir un rayonnement électromagnétique sur son premier élément d'antenne 105a et à réémettre ce rayonnement depuis son deuxième élément d'antenne 105b, par exemple en introduisant un déphasage ϕ connu. En réception, chaque cellule 105 est apte à recevoir un rayonnement électromagnétique sur son deuxième élément d'antenne 105b et à réémettre ce rayonnement depuis son premier élément d'antenne 105a, en direction de la source 101, avec le même déphasage ϕ. Le rayonnement réémis par le premier élément d'antenne 105a est par exemple focalisé sur la source 101.

Les caractéristiques du rayonnement en champ proche ou lointain produit par l'antenne 100, notamment sa forme (ou gabarit), son intensité et sa direction d'émission maximale (ou direction de pointage), dépendent des valeurs des déphasages respectivement introduits par les différentes cellules 105 du réseau 103.

Les antennes à réseau transmetteur ont pour avantages, entre autres, de présenter une bonne efficacité énergétique et d'être relativement simples, peu onéreuses et peu encombrantes. Cela provient notamment du fait que les réseaux transmetteurs sont réalisables en technologie planaire, généralement sur circuit imprimé.

La présente description vise plus particulièrement les antennes à réseau transmetteur 103 reconfigurable. Le réseau transmetteur 103 est dit reconfigurable lorsque les cellules élémentaires 105 sont commandables électroniquement de façon individuelle pour modifier leur valeur de déphasage ϕ et/ou leur amplitude, ce qui permet de modifier dynamiquement les caractéristiques du rayonnement généré par l'antenne, et notamment de modifier sa direction de pointage sans déplacer mécaniquement l'antenne ou une partie de l'antenne au moyen d'un élément motorisé.

La figure 2 est une vue de côté, schématique et partielle, d'un exemple d'antenne 200 à réseau réflecteur (« reflectarray antenna », en anglais) du type auquel s'appliquent, à titre d'exemple, des modes de réalisation décrits.

L'antenne 200 comprend typiquement une ou plusieurs sources primaires 201 (une unique source 201, dans l'exemple représenté) irradiant un réseau réflecteur 203. La source 201 peut présenter une polarisation quelconque, par exemple linéaire ou circulaire. Le réseau 203 comprend une pluralité de cellules élémentaires 205, par exemple disposées en matrice selon des lignes et des colonnes. Chaque cellule 205 comprend typiquement un élément d'antenne 205a, situé du côté d'une première face du réseau 203 disposée en regard de la source primaire 201, et un élément réflecteur 205b, situé du côté d'une deuxième face du réseau opposée à la première face. La première face du réseau 203 est par exemple tournée vers un milieu d'émission, ou milieu extérieur, de l'antenne 200. L'élément réflecteur 205b est par exemple, comme illustré en figure 2, commun à toutes les cellules élémentaires 205 du réseau 203.

Chaque cellule 205 est apte, en émission, à recevoir un rayonnement électromagnétique émis par la source 201 sur son élément d'antenne 205a et à réémettre ce rayonnement, après réflexion par l'élément réflecteur 205b, depuis son élément d'antenne 205a, par exemple en introduisant un déphasage ϕ connu et/ou en modifiant l'amplitude du rayonnement. En réception, chaque cellule 205 est apte à recevoir un rayonnement électromagnétique sur son élément d'antenne 205a et à réémettre ce rayonnement, après réflexion par l'élément réflecteur 205b, depuis son élément d'antenne 205a, en direction de la source 201, avec le même déphasage ϕ. Le rayonnement réémis par l'élément d'antenne 205a est par exemple focalisé sur la source 201.

Les caractéristiques du rayonnement produit par l'antenne 200, notamment sa forme (ou gabarit), son intensité et sa direction d'émission maximale (ou direction de pointage), dépendent des valeurs des déphasages respectivement introduits par les différentes cellules 205 du réseau 203.

Les antennes à réseau réflecteur présentent des avantages similaires à ceux des antennes à réseau transmetteur.

La présente description vise plus particulièrement les antennes à réseau réflecteur 203 reconfigurable, c'est-à-dire dont les cellules élémentaires 205 sont commandables électroniquement de façon individuelle pour modifier leur valeur de déphasage ϕ de façon analogue à ce qui a été précédemment décrit en relation avec l'antenne 100 à réseau transmetteur 103.

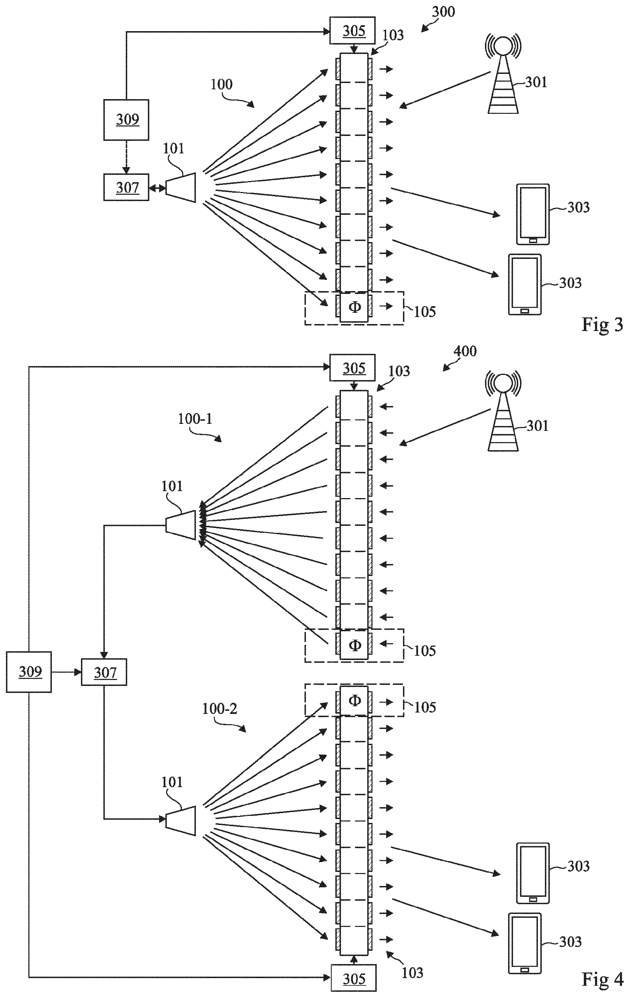

La figure 3 est une vue de côté, schématique et partielle, d'un exemple de dispositif relais 300 pour ondes radio selon un mode de réalisation.

Dans l'exemple représenté, le dispositif relais 300 comprend une unique antenne à réseau transmetteur, par exemple du type de l'antenne 100 précédemment décrite en relation avec la figure 1. Selon un mode de réalisation, l'antenne 100 à réseau transmetteur du dispositif relais 300 est configurée pour recevoir une onde électromagnétique, par exemple une onde radiofréquence ou onde radio, en provenance d'une antenne distante 301 et pour réémettre l'onde électromagnétique vers un milieu extérieur, par exemple à destination d'un ou plusieurs dispositifs cibles 303 (deux dispositifs cibles 303, dans l'exemple représenté). À titre d'exemple, l'antenne distante 301 est intégrée dans une station de base d'une infrastructure d'un réseau de téléphonie mobile et chaque dispositif cible 303 est un téléphone mobile.

Dans l'exemple illustré en figure 3, le dispositif relais 300 comporte un circuit 305 de commande des cellules élémentaires 105 du réseau transmetteur 103 de l'antenne 100. À titre d'exemple, le circuit 305 permet de modifier la valeur du déphasage ϕ introduit par chaque cellule élémentaire 105 du réseau transmetteur 103 comme exposé ci-dessus en relation avec la figure 1.

Dans l'exemple représenté, le dispositif relais comporte en outre un circuit d'émission-réception 307 relié ou connecté à la source primaire 101 de l'antenne 100. Le circuit d'émission-réception 307 est configuré pour recevoir, de la source 101, un signal image de l'onde électromagnétique provenant de l'antenne distante 301 et captée par l'antenne 100. Le circuit 307 est en outre configuré pour transmettre, à la source 101, un signal image de l'onde électromagnétique à réémettre par l'antenne 100. L'onde électromagnétique réémise par l'antenne 100 est fonction de l'onde électromagnétique préalablement captée par l'antenne 100.

Bien que cela n'ait pas été détaillé en figure 3, le circuit 307 est par exemple relié à la source 101 par l'intermédiaire d'un circulateur. Dans ce cas, le circulateur est par exemple adapté à transmettre, au circuit 307, des signaux provenant de la source 101 et à renvoyer, à la source 101, des signaux provenant du circuit 307 après traitement par le circuit 307.

Le circuit 307 du dispositif relais 300 est par exemple configuré pour amplifier l'onde électromagnétique reçue par l'antenne 100. Dans ce cas, l'onde électromagnétique en provenance de l'antenne distante 301 et reçue par l'antenne 100 est amplifiée préalablement à sa réémission par l'antenne 100. Cela permet avantageusement d'accroître la portée de l'antenne distante 301, notamment par rapport à un cas où seule l'antenne 301 serait mise en œuvre ou par rapport à un cas où un relais dépourvu de fonction d'amplification, par exemple un relais dit « passif », dépourvu de source primaire, serait utilisé. Une meilleure couverture réseau est ainsi obtenue.

Le circuit 307 du dispositif relais 300 est par exemple en outre, ou à titre de variante, configuré pour moduler l'onde électromagnétique reçue par l'antenne 100. À titre d'exemple, le circuit 307 est plus précisément, dans ce cas, configuré pour relier ou connecter la source primaire 101 de l'antenne 100 :
- à une première impédance de valeur sensiblement nulle, par exemple de l'ordre de quelques milliohms ou de quelques microohms, c'est-à-dire sensiblement équivalente à un court-circuit ;
- à une deuxième impédance de valeur sensiblement infinie, par exemple de l'ordre de quelques mégohms ou de quelques gigaohms, c'est-à-dire sensiblement équivalente à un circuit ouvert ; ou
- à une troisième impédance de valeur sensiblement égale à l'impédance de l'antenne 100.

Dans cet exemple, le fait de commuter la source 101 entre la première impédance et la deuxième impédance permet à l'antenne 100 d'émettre des formes d'onde présentant, l'une par rapport à l'autre, une différence de phase de l'ordre de 180°. Par ailleurs, le fait de relier ou de connecter la source 101 à la troisième impédance permet d'interrompre, ou d'atténuer fortement, l'émission d'ondes électromagnétiques par l'antenne 100, l'antenne 100 se comportant alors comme une surface quelconque. Cela permet avantageusement au circuit 307 du dispositif relais 300 d'appliquer un codage, par exemple un codage de type orthogonal à moyenne nulle, à l'onde électromagnétique provenant de l'antenne distante 301, l'onde réémise vers le milieu extérieur étant ainsi codée. Une communication plus robuste à la présence de fouillis, d'interférences et permettant des accès multiples peut ainsi être mise en œuvre entre le dispositif relais 300 et les dispositifs 303. À titre d'exemple, chaque dispositif 303 est adapté à démoduler l'onde électromagnétique réémise par le dispositif relais 300 de façon à obtenir une communication sécurisée entre le dispositif relais 300 et les dispositifs 303 ou de manière à éliminer une contribution d'un autre dispositif relais, par exemple du type du dispositif relais 300, mis en œuvre par un opérateur différent de celui du dispositif relais 300 utilisé par l'opérateur du dispositif 303.

Le circuit 307 du dispositif relais 300 est par exemple en outre, ou à titre de variante, configuré pour filtrer l'onde électromagnétique en provenance de l'antenne distante 301 avant sa réémission vers le milieu extérieur. Dans ce cas, le circuit 307 comprend par exemple un filtre passe-bande permettant par exemple de sélectionner une plage de fréquences d'émission et de réception, ou un canal d'émission-réception, à l'intérieur d'une gamme de fréquences capables d'être émises par l'antenne 100 du dispositif relais 300. À titre d'exemple, la sélection de la plage de fréquences est effectuée après l'acquisition du dispositif relais 300 par un opérateur d'un réseau comprenant le dispositif 300, la plage de fréquences correspondant alors par exemple à une plage de fréquences allouée à l'opérateur pour mettre en œuvre des communications radiofréquence.

À titre de variante, dans un cas où le dispositif 300 est par exemple exploité par plusieurs opérateurs, la plage de fréquences d'émission-réception peut être sélectionnée de façon dynamique par le circuit 307 pour correspondre, à chaque instant, à la plage de fréquences allouée à l'opérateur souhaitant mettre en œuvre une communication utilisant le dispositif relais 300. Cela permet avantageusement à un même dispositif relais 300 d'être utilisé tour à tour par plusieurs opérateurs. Il en résulte une baisse de coût pour les opérateurs.

Le circuit 307 du dispositif relais 300 est par exemple en outre, ou à titre de variante, configuré pour relier la source primaire 101 de l'antenne 100 à un récepteur, par exemple un récepteur radiofréquence, non représenté en figure 3. Dans ce cas, le circuit 307 comporte par exemple plus précisément un commutateur comprenant une seule borne d'entrée reliée ou connectée à un nœud d'application d'un potentiel de référence, par exemple la masse, et deux bornes de sortie connectées respectivement à la source primaire 101 et au récepteur radiofréquence. Cela permet d'utiliser le récepteur radiofréquence pour détecter une position de chaque dispositif 303 par rapport au dispositif relais 300 lors d'une étape de détection, puis de reconfigurer le réseau transmetteur 103 de l'antenne 100 afin de recevoir puis réémettre l'onde provenant de l'antenne distante 301, lors d'étapes ultérieures de réception et d'émission, dans une direction correspondant à la position du ou des dispositifs 303 telle que déterminée à l'issue de l'étape de détection. Un avantage de cette structure et de ce mode de fonctionnement tient au fait que cela permet de n'utiliser qu'une seule chaîne radiofréquence. La position de chaque dispositif cible 303 est par exemple détectée par mesure de RSSI (de l'anglais « Received Signal Strength Indication » - indicateur de puissance du signal reçu) d'un signal transmis par le dispositif cible 303 et capté par l'antenne 100. À titre d'exemple, le commutateur du circuit 307 est de type SPDT (de l'anglais « Single Pole, Double Throw »).

Dans l'exemple représenté, le dispositif relais comprend en outre un circuit 309, par exemple un circuit de commande global, connecté au circuit 305 de commande des cellules élémentaires 105 du réseau transmetteur 103 de l'antenne 100 et connecté, de façon optionnelle, au circuit d'émission-réception 307.

La figure 4 est une vue de côté, schématique et partielle, d'un exemple de dispositif relais 400 pour ondes radio selon un mode de réalisation.

Dans l'exemple représenté, le dispositif relais 400 comprend des première et deuxième antennes 100-1 et 100-2 à réseau transmetteur, par exemple chacune du type de l'antenne 100 précédemment décrite en relation avec la figure 1. Selon un mode de réalisation, l'une des antennes 100-1, 100-2 à réseau transmetteur du dispositif relais 400 (la première antenne 100-1, dans l'exemple représenté) est configurée pour recevoir l'onde électromagnétique en provenance de l'antenne distante 301 tandis que l'autre antenne 100-2, 100-1 (la deuxième antenne 100-2, dans cet exemple) est configurée pour réémettre l'onde électromagnétique vers le milieu extérieur, par exemple à destination du ou des dispositifs cibles 303.

Dans cet exemple, le circuit 307 relie la source primaire 101 de la première antenne 100-1 à la source primaire 101 de la deuxième antenne 100-2. Le circuit 307 est par exemple configuré pour mettre en œuvre des fonctions identiques ou analogues à celles précédemment décrites en relation avec la figure 3, par exemple des fonctions d'amplification, de filtrage, de codage, etc. Dans l'exemple représenté, le circuit 309 est par exemple connecté au circuit 305 de commande du réseau transmetteur 103 de chaque antenne 100-1, 100-2 du dispositif relais 400 et, de façon optionnelle, au circuit 307.

Le dispositif 400 présente des avantages similaires à ceux du dispositif 300 précédemment décrit en relation avec la figure 3.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, bien que des modes de réalisation dans lesquels le dispositif relais 300, 400 comporte au moins une antenne 100, 100-1, 100-2 à réseau transmetteur aient été détaillés ci-dessus, la personne du métier est capable d'adapter les modes de réalisation décrits au cas où au moins l'une des antennes 100, 100-1, 100-2 à réseau transmetteur est remplacée par une antenne à réseau réflecteur, par exemple du type de l'antenne 200 précédemment décrite en relation avec la figure 2.

En outre, toute combinaison des différentes fonctions susceptibles d'être mises en œuvre par le circuit 307 des dispositifs relais 300 et 400 est à la portée de la personne du métier à partir des indications de la présente description.

Enfin, la mise en œuvre pratique des modes de réalisation et variantes décrits est à la portée de la personne du métier à partir des indications fonctionnelles données ci-dessus. En particulier, la réalisation pratique des circuits 305, 307 et 309 pour permettre la mise en œuvre des fonctions précédemment décrites est à la portée de la personne du métier à partir des indications de la présente description.

## Revendications

1. Dispositif relais (400) comportant :
- une première antenne (100-1 ; 200) à réseau transmetteur ou réflecteur comprenant un premier réseau transmetteur (103) ou réflecteur (203) et une première source primaire (101 ; 201), la première antenne (100-1 ; 200) étant configurée pour recevoir une onde électromagnétique en provenance d'une antenne distante (301) ;
- une deuxième antenne (100-2 ; 200) à réseau transmetteur ou réflecteur comprenant un deuxième réseau transmetteur (103) ou réflecteur (203) et une deuxième source primaire (101 ; 201), la deuxième antenne (100-2 ; 200) étant configurée pour réémettre l'onde électromagnétique vers un milieu extérieur ; et
- un circuit d'émission-réception (307) connecté à la première source primaire (101 ; 201),
dans lequel le circuit d'émission-réception (307) est configuré pour successivement :
a) recevoir, de la première source primaire (101 ; 201), un signal image de l'onde électromagnétique provenant de l'antenne distante (301) ;
b) filtrer l'onde électromagnétique en provenance de l'antenne distante (301) ; et
c) transmettre, à la deuxième source primaire (101 ; 201), un signal image de l'onde électromagnétique à réémettre vers le milieu extérieur.

2. Dispositif selon la revendication 1, dans lequel le circuit d'émission-réception (307) est en outre configuré pour amplifier l'onde électromagnétique reçue par la première antenne (100-1 ; 200).

3. Dispositif selon la revendication 1 ou 2, dans lequel le circuit d'émission-réception (307) est en outre configuré pour moduler l'onde électromagnétique reçue par la première antenne (100-1 ; 200).

4. Dispositif selon la revendication 3, dans lequel le circuit d'émission-réception (307) est configuré pour connecter la première source primaire (101 ; 201) :
- à une première impédance de valeur sensiblement nulle ;
- à une deuxième impédance de valeur sensiblement infinie ; ou
- à une troisième impédance de valeur sensiblement égale à l'impédance de la première antenne (100-1 ; 200).

5. Dispositif selon l'une quelconque des revendications 1 à 4, dans lequel le circuit d'émission-réception (307) comprend un filtre passe-bande.

6. Procédé de commande d'un dispositif relais (400) comportant :
- une première antenne (100-1 ; 200) à réseau transmetteur ou réflecteur comprenant un premier réseau transmetteur (103) ou réflecteur (203) et une première source primaire (101 ; 201), la première antenne (100-1 ; 200) étant configurée pour recevoir une onde électromagnétique en provenance d'une antenne distante (301) ;
- une deuxième antenne (100-2 ; 200) à réseau transmetteur ou réflecteur comprenant un deuxième réseau transmetteur (103) ou réflecteur (203) et une deuxième source primaire (101 ; 201), la deuxième antenne (100-2 ; 200) étant configurée pour réémettre l'onde électromagnétique vers un milieu extérieur ; et
- un circuit d'émission-réception (307) connecté à la première source primaire (101 ; 201),
le procédé comprenant les étapes successives suivantes :
a) recevoir, au moyen du circuit d'émission-réception, de la première source primaire (101 ; 201), un signal image de l'onde électromagnétique en provenance de l'antenne distante (301) ;
b) filtrer, au moyen du circuit d'émission-réception (307), l'onde électromagnétique reçue par la première antenne (100-1 ; 200) ; et
c) transmettre, au moyen du circuit d'émission-réception, à la deuxième source primaire (101 ; 201), un signal image de l'onde électromagnétique à réémettre vers le milieu extérieur.

7. Procédé selon la revendication 6, comprenant en outre, entre les étapes a) et c), l'étape d'amplifier l'onde électromagnétique reçue par la première antenne (100-1 ; 200) .

8. Procédé selon la revendication 6 ou 7, comprenant en outre, entre les étapes a) et c), l'étape de moduler l'onde électromagnétique reçue par la première antenne (100-1 ; 200) .

9. Procédé selon l'une quelconque des revendications 6 à 8, comprenant en outre, préalablement à l'étape a), l'étape de détecter une position d'au moins un dispositif cible (303) par rapport au dispositif relais (300 ; 400), la réémission s'effectuant, à l'étape c), selon une direction correspondant à la position dudit au moins un dispositif cible telle que déterminée à l'issue de l'étape de détection.

## Patentansprüche

1. Relais-Einrichtung (400), die Folgendes aufweist:
- eine erste Transmitarray- oder Reflektarray-Antenne (100-1; 200), die ein erstes Sender- (103) oder Reflektor- (203) Array und eine erste Primärquelle (101; 201) aufweist, wobei die erste Antenne (100-1; 200) eingerichtet ist zum Empfangen einer elektromagnetischen Welle von einer entfernten Antenne (301);
- eine zweite Transmitarray- oder Reflektarray-Antenne (100-2; 200), die ein zweites Sender- (103) oder Reflektor- (203) Array und eine zweite Primärquelle (101; 201) aufweist, wobei die zweite Antenne (100-2; 200) eingerichtet ist zum Wiederaussenden der elektromagnetischen Welle an eine externe Umgebung; und
- eine Transceiver-Schaltung (307), die mit der ersten Primärquelle (101; 201) verbunden ist,
wobei die Transceiver-Schaltung (307) eingerichtet ist zum aufeinanderfolgenden:
a) Empfangen, von der ersten Primärquelle (101; 201), eines Signals, das ein Abbild der von der entfernten Antenne (301) kommenden elektromagnetischen Welle ist;
b) Filtern der von der entfernten Antenne (301) kommenden elektromagnetischen Welle; und
c) Senden, an die zweite Primärquelle (101; 201), eines Signals, das ein Abbild der an die externe Umgebung wiederauszusendenden elektromagnetischen Welle ist.

2. Einrichtung nach Anspruch 1, wobei die Transceiver-Schaltung (307) ferner eingerichtet ist zum Verstärken der von der ersten Antenne (100-1; 200) empfangenen elektromagnetischen Welle.

3. Einrichtung nach Anspruch 1 oder 2, wobei die Transceiver-Schaltung (307) ferner eingerichtet ist zum Modulieren der von der ersten Antenne (100-1; 200) empfangenen elektromagnetischen Welle.

4. Einrichtung nach Anspruch 3, wobei die Transceiver-Schaltung (307) eingerichtet ist zum Verbinden der ersten Primärquelle (101; 201):
- mit einer ersten Impedanz, die einen im Wesentlichen null Wert hat;
- mit einer zweiten Impedanz, die einen im Wesentlichen unendlichen Wert hat; oder
- mit einer dritten Impedanz, die einen Wert hat, der im Wesentlichen gleich der Impedanz der ersten Antenne (100-1; 200) ist.

5. Einrichtung nach einem der Ansprüche 1 bis 4, wobei die Transceiver-Schaltung (307) einen Bandpassfilter aufweist.

6. Ein Verfahren zum Steuern einer Relais-Einrichtung (400), die Folgendes aufweist:
- eine erste Transmitarray- oder Reflektarray-Antenne (100-1; 200), die ein erstes Sender- (103) oder Reflektor- (203) Array und eine erste Primärquelle (101; 201) aufweist,
wobei die erste Antenne (100-1; 200) eingerichtet ist zum Empfangen einer von einer entfernten Antenne (301) kommenden elektromagnetischen Welle;
- eine zweite Transmitarray- oder Reflektarray-Antenne (100-2; 200), die ein zweites Sender- (103) oder Reflektor- (203) Array und eine zweite Primärquelle (101; 201) aufweist,
wobei die zweite Antenne (100-2; 200) eingerichtet ist zum Wiederaussenden der elektromagnetischen Welle an eine externe Umgebung; und
- eine Transceiver-Schaltung (307), die mit der ersten Primärquelle (101; 201) verbunden ist,
wobei das Verfahren die folgenden aufeinanderfolgenden Schritte aufweist:
a) Empfangen, mittels der ersten Transceiver-Schaltung der ersten Primärquelle (101; 201), eines Signals, das ein Abbild der von der entfernten Antenne (301) kommenden elektromagnetischen Welle ist;
b) Filtern, mittels der Transceiver-Schaltung (307), der von der ersten Antenne (100-1; 200) empfangenen elektromagnetischen Welle; und
c) Senden, mittels der Transceiver-Schaltung, an die zweite Primärquelle (101; 201), eines Signals, das ein Abbild der an die externe Umgebung wiederauszusendenden elektromagnetischen Welle ist.

7. Verfahren nach Anspruch 6, ferner aufweisend, zwischen Schritt a) und Schritt c), den Schritt des Verstärkens der von der ersten Antenne (100-1; 200) empfangenen elektromagnetischen Welle.

8. Verfahren nach Anspruch 6 oder 7, ferner aufweisend, zwischen Schritt a) und Schritt c), den Schritt des Modulierens der von der ersten Antenne (100-1; 200) empfangenen elektromagnetischen Welle.

9. Ein Verfahren nach einem der Ansprüche 6 bis 8, ferner aufweisend, vor Schritt a), den Schritt des Erfassens einer Position wenigstens einer Zieleinrichtung (303) relativ zur Relais-Einrichtung (300; 400), wobei das Wiederaussenden, in Schritt c), in einer Richtung durchgeführt wird, die der Position der wenigstens einen Zieleinrichtung entspricht, wie sie am Ende des Erfassungsschritts bestimmt wurde.

## Claims

1. Relay device (400) comprising:
- a first transmitarray or reflectarray antenna (100-1; 200) comprising a first transmitter (103) or reflector (203) array and a first primary source (101; 201), the first antenna (100-1; 200) being configured to receive an electromagnetic wave from a remote antenna (301);
- a second transmitarray or reflectarray antenna (100-2; 200) comprising a second transmitter (103) or reflector (203) array and a second primary source (101; 201), the second antenna (100-2; 200) being configured to retransmit the electromagnetic wave to an external environment; and
- a transceiver circuit (307) connected to the first primary source (101; 201),
wherein the transceiver circuit (307) is configured to successively:
a) receive, from the first primary source (101; 201), a signal which is an image of the electromagnetic wave coming from the remote antenna (301);
b) filter the electromagnetic wave coming from the remote antenna (301); and
c) transmit, to the second primary source (101; 201), a signal which is an image of the electromagnetic wave to be retransmitted to the external environment.

2. Device according to claim 1, wherein the transceiver circuit (307) is further configured to amplify the electromagnetic wave received by the first antenna (100-1; 200).

3. Device according to claim 1 or 2, wherein the transceiver circuit (307) is further configured to modulate the electromagnetic wave received by the first antenna (100-1; 200).

4. Device according to claim 3, wherein the transceiver circuit (307) is configured to connect the first primary source (101; 201):
- to a first impedance having a substantially zero value;
- to a second impedance having a substantially infinite value; or
- to a third impedance having a value substantially equal to the impedance of the first antenna (100-1; 200).

5. Device according to any of claims 1 to 4, wherein the transceiver circuit (307) comprises a bandpass filter.

6. Method of controlling a relay device (400) comprising:
- a first transmitarray or reflectarray antenna (100-1; 200) comprising a first transmitter (103) or reflector (203) array and a first primary source (101; 201),
the first antenna (100-1; 200) being configured to receive an electromagnetic wave coming from a remote antenna (301);
- a second transmitarray or reflectarray antenna (100-2; 200) comprising a second transmitter (103) or reflector (203) array and a second primary source (101; 201),
the second antenna (100-2; 200) being configured to retransmit the electromagnetic wave to an external environment; and
- a transceiver circuit (307) connected to the first primary source (101; 201),
the method comprising the following successive steps:
a) receiving, by means of the first transceiver circuit of the first primary source (101; 201), a signal which is an image of the electromagnetic wave coming from the remote antenna (301);
b) filtering, by means of the transceiver circuit (307), the electromagnetic wave received by the first antenna (100-1; 200); and
c) transmitting, by means of the transceiver circuit, to the second primary source (101; 201), a signal which is an image of the electromagnetic wave to be retransmitted to the external environment.

7. Method according to claim 6, further comprising, between steps a) and c), the step of amplifying the electromagnetic wave received by the first antenna (100-1; 200).

8. Method according to claim 6 or 7, further comprising, between steps a) and c), the step of modulating the electromagnetic wave received by the first antenna (100-1; 200) .

9. Method according to any one of claims 6 to 8, further comprising, prior to step a), the step of detecting a position of at least one target device (303) relative to the relay device (300; 400), the retransmission being performed, in step c), in a direction corresponding to the position of said at least one target device as determined at the end of the detection step.
